# EUROPÄISCHE PATENTSCHRIFT

(11) **EP 1 957 331 B1**
(45) Veröffentlichungstag und Bekanntmachung des Hinweises auf die Patenterteilung: **07.10.2009**
(21) Anmeldenummer: 06819445.5
(22) Anmeldetag: 14.11.2006
(51) Int. Cl.: B60T 8/36, B60T 13/68, B60T 15/02, H01F 7/18

(54) **VERFAHREN ZUM SICHEREN SCHLIESSEN EINES MAGNETVENTILS**
METHOD FOR RELIABLY CLOSING A SOLENOID VALVE
PROCEDE POUR FERMER DE MANIERE SURE UNE ELECTROVANNE

(30) Priorität: 25.11.2005 DE 102005056210
(43) Veröffentlichungstag der Anmeldung: 20.08.2008
(73) Patentinhaber: ROBERT BOSCH GMBH, 70442 Stuttgart (DE)
(72) Erfinder: LANDESFEIND, Klaus, 71522 Backnang (DE); LAIER, Christian, 68535 Neckarhausen (DE); BODMANN, Carsten, 71634 Ludwigsburg (DE); GOEPFERT, Ronny, 74395 Mundelsheim (DE); MAERZ, Manfred, 71638 Ludwigsburg (DE)
(86) Internationale Anmeldenummer: PCT/EP2006/068412
(87) Internationale Veröffentlichungsnummer: WO 2007/060111

(56) Entgegenhaltungen:
- DE-A1- 4 305 488
- DE-A1- 4 429 373
- DE-A1- 10 104 497

## Beschreibung

### Stand der Technik

Die Erfindung betrifft ein Verfahren zum sicheren Schließen eines Magnetventils. Aus der DE 101 44 879 C1 sind ein Verfahren und eine Vorrichtung zur Verbesserung der Druckaufbaudynamik in einem Bremskreis bekannt. Das dort beschriebene Bremssystem ist in der Lage, fahrerunabhängige Bremseingriffe durchzuführen. Dazu wird ein Umschaltventil gesperrt und eine Rückförderpumpe aktiviert.

### Offenbarung der Erfindung

Die Erfindung betrifft ein Verfahren zum Schließen eines Magnetventils, bei dem das Magnetventil mit einem ersten Strom bzw. ersten Stromwert beaufschlagt wird, welcher zu einem ersten Schließen des Magnetventils führt, danach das Magnetventil mit einem zweiten Strom bzw. zweiten Stromwert beaufschlagt wird, welcher zu einem erneuten teilweisen Öffnen des Magnetventils führt und danach das Magnetventil mit einem dritten Strom bzw. dritten Stromwert beaufschlagt wird, welcher zu einem zweiten Schließen des Magnetventils führt.
Der dritte Stromwert ist derart gewählt, dass das zweite Schließen mit einer höheren Schließgeschwindigkeit des Magnetventils erfolgt als das erste Schließen.
Die Erfindung umfasst damit einen Schließvorgang eines Magnetventils, welcher sich aus einen ersten vollständigen Schließvorgang und einem zweiten Schließvorgang, bei welchem das Ventil zuvor nur teilweise geöffnet wurde, zusammensetzt. Der erste Schließvorgang erfolgt dabei langsamer als der zweite Schließvorgang und ist damit geräuschärmer. Der zweite Schließvorgang erfolgt stärker, schließt dabei jedoch das Ventil völlig leckagesicher.

Eine vorteilhafte Ausgestaltung der Erfindung ist **dadurch gekennzeichnet, dass** die Beaufschlagung des Magnetventils mit dem zweiten Stromwert derart kurzzeitig ist, dass das Magnetventil nicht vollständig geöffnet wird. Durch das nicht vollständige Öffnen wird die Dauer des geräuschbehafteten zweiten Schließvorgangs möglichst kurz gehalten. Weiter wird durch das sehr kurzzeitige und nur teilweise Öffnen ein Verlust des eingesperrten Drucks minimiert.

Eine vorteilhafte Ausgestaltung der Erfindung ist **dadurch gekennzeichnet, dass** es sich bei dem Magnetventil um das zwischen dem Hauptbremszylinder sowie der Förderseite der Rückförderpumpe angeordnete Umschaltventil eines hydraulischen Bremskreises, welcher im Rahmen einer Radschlupfregelung nutzbar ist, handelt.

Eine vorteilhafte Ausgestaltung der Erfindung ist **dadurch gekennzeichnet, dass** die Beaufschlagung des Magnetventils mit dem ersten Stromwert bei Vorliegen einer Fahrerbremsung mit hinreichend starker Intensität erfolgt. Durch das dadurch bewirkte Schließen des Ventils wird der vom Fahrer aufgebrachte Bremsdruck im Bremskreis eingesperrt und kann beispielsweise für eine Haltefunktion des Fahrzeugs bzw. eine Wegrollverhinderung verwendet werden.

Eine vorteilhafte Ausgestaltung der Erfindung ist **dadurch gekennzeichnet, dass** die Beaufschlagung des Magnetventils mit dem zweiten Stromwert und dem dritten Stromwert erst dann erfolgt, wenn die Intensität der Fahrerbremsung bereits wieder abgenommen hat. Da der Fahrer zu diesem Zeitpunkt das Bremspedal bereits zurücknimmt oder losgelassen hat, spürt er durch den in seiner Intensität stärkeren zweiten Schließvorgang keine bzw. keine wesentliche irritierende und komfortmindernde Rückwirkung auf das Bremspedal mehr.

Eine vorteilhafte Ausgestaltung der Erfindung ist **dadurch gekennzeichnet, dass** durch das Schließen des Umschaltventils der aufgebaute Bremsdruck im Bremskreis eingesperrt wird.

Eine vorteilhafte Ausgestaltung der Erfindung ist **dadurch gekennzeichnet, dass** das Magnetventil unmittelbar nach der Beaufschlagung mit dem zweiten Stromwert mit dem dritten Stromwert beaufschlagt wird. Dadurch wird die zweite Schließphase zeitlich möglichst kurz gehalten.

Eine vorteilhafte Ausgestaltung der Erfindung ist **dadurch gekennzeichnet, dass** das Magnetventil nach dem zweiten Schließen mit einem vierten Stromwert beaufschlagt wird, welcher das Magnetventil geschlossen hält.

Eine vorteilhafte Ausgestaltung der Erfindung ist **dadurch gekennzeichnet,**
- **dass** es sich bei dem Magnetventil um ein stromlos offenes Magnetventil handelt,
- dass der zweite Stromwert geringer als der erste Stromwert ist und
- dass der dritte Stromwert größer als der erste Stromwert ist.
   Weiter umfasst die Erfindung eine Vorrichtung zur Ansteuerung eines Magnetventils, welche derart aufgebaut ist, dass
- das Magnetventil mit einem ersten Stromwert beaufschlagt wird, welcher zu einem ersten Schließen des Magnetventils führt,
- danach das Magnetventil mit einem zweiten Stromwert beaufschlagt wird, welcher zu einem erneuten teilweisen Öffnen des Magnetventils führt
- danach das Magnetventil mit einem dritten Stromwert beaufschlagt wird, welcher zu einem zweiten Schließen des Magnetventils führt,
- wobei der dritte Stromwert derart gewählt ist, dass das zweite Schließen mit einer höheren Schließgeschwindigkeit des Magnetventils erfolgt als das erste Schließen.

Die vorteilhaften Ausgestaltungen des erfindungsgemäßen Verfahrens äußern sich auch als vorteilhafte Ausgestaltungen der erfindungsgemäßen Vorrichtung und umgekehrt.

Die Zeichnung umfasst die Figuren 1 bis 4.
Figur 1 zeigt die Topologie eines Bremskreises, welcher im Rahmen einer Radschlupfregelung wie z.B. ABS, ASR oder einer Fahrdynamikregelung eingesetzt werden kann.
Figur 2 zeigt verschiedene zeitliche Verläufe von Druck und Ventilstrom bei a) konventioneller Ansteuerung und b) erfindungsgemäßer Ansteuerung eines Magnetventils.
Figur 3 zeigt den Ablauf des erfindungsgemäßen Verfahrens.
Figur 4 zeigt den Aufbau der erfindungsgemäßen Vorrichtung.

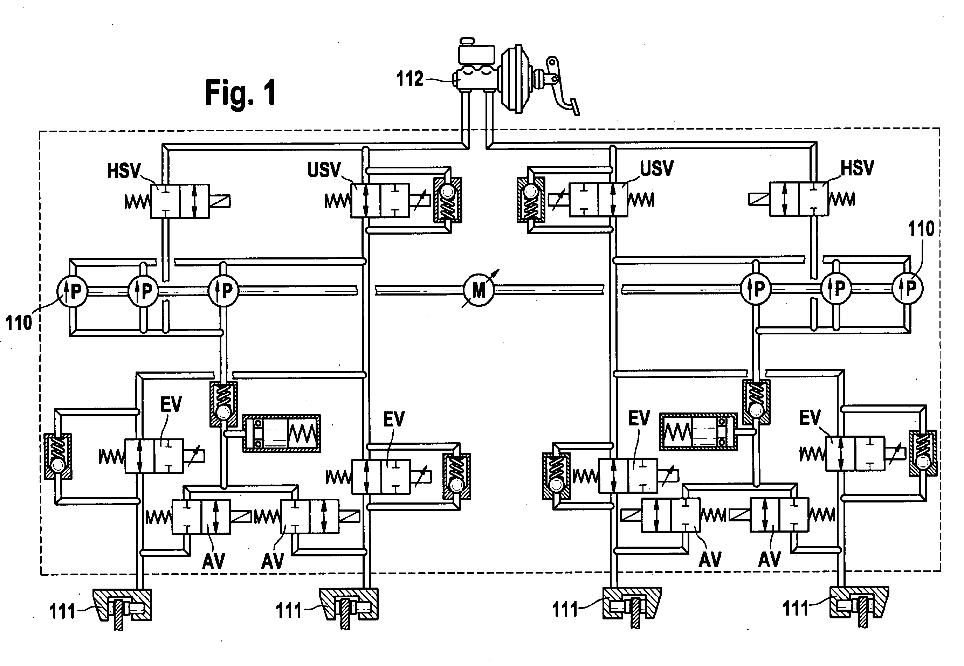

Fahrdynamikregelungssysteme umfassen Funktionen, welche ein Abbremsen bzw. Halten des Fahrzeugs bei unbetätigter Bremse durch Einsperren eines Drucks im Bremskreis erfordern. Hierbei muss die Verbindung zwischen dem in Fig. 1 mit 112 bezeichneten Hauptbremszylinder und den mit EV bezeichneten Einlassventilen durch Schließen der mit USV bezeichneten Umschaltventile abgesperrt werden. Über die Dauer einer sich anschließenden Druckhaltephase liegt dann bei unbetätigter Bremse der eingesperrte Bremsdruck als Differenzdruck über dem Umschaltventil an. Eine am Umschaltventil möglicherweise auftretende Leckage könnte zu einem sehr schnellen Druckabfall im Bremskreis führen und erfordert dann einen erneuten Druckaufbau durch die mit 110 bezeichneten Rückförderpumpen. Dieser erneute Druckaufbau ist mit Geräuschen und damit einer Komfortminderung für die Fahrzeuginsassen verbunden. Die Radbremszylinder sind in Fig. 1 mit 111 gekennzeichnet, AV kennzeichnet die Auslassventile.

Die elektrische Ansteuerung des Umschaltventils während des Schließvorgangs, d.h. der Übergang zur Druckhaltephase, hat einen Einfluss auf die Leckageneigung des Umschaltventils. Diese Leckageneigung kann durch eine optimierte Ansteuerung des Umschaltventils unterdrückt werden.

Ursache für die Leckageneigung ist eine verbleibende minimale Restöffnung des Umschaltventils nach dem Schließvorgang. Diese kann dann auftreten, wenn sich das Umschaltventil sehr langsam schließt, d.h. der Ventilstößel gleitet mit einer sehr geringen Geschwindigkeit in den Ventilsitz. Dabei kann es infolge der Oberflächenrauhigkeiten von Ventilstößel und Ventilsitz zu einem Verhaken des Ventilstößels und einer geringen Restöffnung zwischen Ventilstößel und Ventilsitz kommen. Diese Restöffnung verursacht einen Druckabfall im Bremskreis.

Durch die Erfindung wird es ermöglicht, den Ventilstößel mit hoher Geschwindigkeit und damit hoher kinetischer Energie in den Ventilsitz zu bewegen. Dies erfolgt durch ein zeitlich sehr kurzes Öffnen des Ventils. Damit erhält der Ventilstößel einen Hub, welcher auf dem Rückweg, d.h. beim erneuten Schließen des Ventils, zu einer Beschleunigung des Ventilstößels genutzt werden kann.

Durch das kurzzeitige Öffnen des USV in der später beschriebenen Phase 3 und dem damit verbundenen Volumenstrom erfolgt zugleich ein Spülen des USV, insbesondere des Sitzbereiches. Eventuell auftretende Schmutzansammlungen im Sitzbereich, welche beispielsweise durch in der Bremsflüssigkeit enthaltene Schmutzpartikel bewirkt werden können, werden damit besser aus dem Sitzbereich entfernt. Diese Schmutzansammlungen können eine weitere Ursache für das nicht vollständige Schließen des USV in Phase 3 sein.

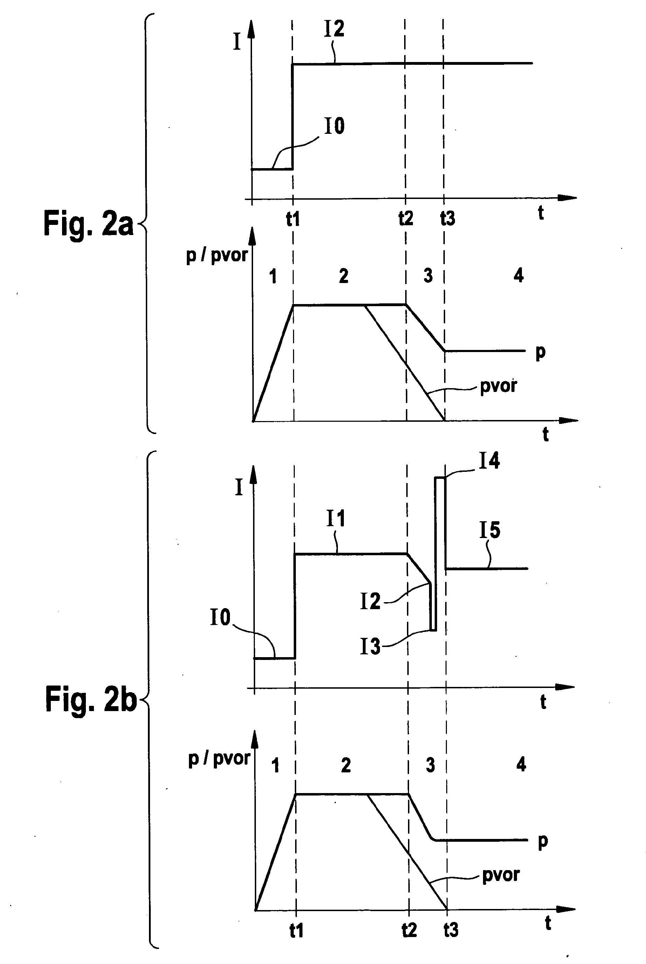

In Fig. 2 ist in den mit a) gekennzeichneten oberen beiden Diagrammen die übliche und bekannte Ansteuerung des Umschaltventils dargestellt, darunter in den mit b) gekennzeichneten unteren beiden Diagrammen die erfindungsgemäße Ansteuerung des Umschaltventils.

In beiden Diagrammen ist
- in Abszissenrichtung die Zeit t aufgetragen und
- in Ordinatenrichtung sind im jeweils oberen Diagramm der Ventilstrom 1 und im
jeweils unteren Diagramm der Vordruck pvor und der Radbremszylinderdruck p aufgetragen.
Die Abszissenrichtung ist jeweils in 4 Phasen unterteilt, welche im folgenden näher erläutert werden.

### Phase 1:

In dieser Phase, welche sich von t = 0 bis t = t1 erstreckt, erfolgt ein fahrerabhängiger Druckaufbau im Bremskreis durch Betätigung des Bremspedals. Dies ist dadurch erkennbar, dass der Vordruck und damit auch der Radbremszylinderdruck über der Zeit ansteigt. Das stromlos offene Umschaltventil ist wegen der zu geringen Bestromung des Ventils (I = 0) offen. In Phase 1 kann der Ventilstrom entweder Null sein oder aber einen Wert 10 aufweisen, welcher noch nicht zum Öffnen des Ventils ausreicht.

### Phase 2:

Diese Phase erstreckt sich von t1 bis t2. Zum Zeitpunkt t1 erreicht der Radbremszylinderdruck einen Wert, welcher gehalten werden soll. Deshalb werden die Umschaltventile zu diesem Zeitpunkt geschlossen, erkennbar am Sprung von I = 10 auf einen vorgegebenen Wert I1 in Fig. 2b bzw. 12 in Fig. 2a. Während dieser Phase wird der Vordruck pvor im Hauptbremszylinder durch Lösen des Bremspedals abgebaut. Jedoch bliebt der Druck p in den Radbremszylindern konstant, da die Umschaltventile geschlossen sind.

### Phase 3:

Diese Phase erstreckt sich von t2 bis t3. Mit dem bereits in Phase 2 begonnenen Absenken des Vordrucks erhöht sich die Druckdifferenz über dem Umschaltventil, bis dieses zum Zeitpunkt t2 öffnet. In der Ansteuerung nach Diagramm a) erfolgt dieser Druckabbau bis zu dem Punkt, an dem öffnende und schließende Kräfte im Ventil im Gleichgewicht stehen, d.h. der Zieldruck von Phase 4 erreicht ist. Das Ventil schließt in diesem Fall sehr langsam, d.h. der Ventilstößel gleitet mit einer Geschwindigkeit nahe Null in den Ventilsitz und es besteht deshalb die Gefahr, dass eine kleine Restöffnung zwischen Ventilsitz und Stößel verbleibt.
Da sowohl in der bekannten Ansteuerung nach Fig. 2a als auch in der erfindungsgemäßen Ansteuerung nach Fig. 2b derselbe Zieldruck erreicht werden soll, wird bei der Ansteuerung nach Fig. 2b bei Beginn von Phase 3 der Strom vom Wert I = I1 auf den Wert I = I2 abgesenkt.

Die optimierte Ansteuerung nach Diagramm b) ist **dadurch gekennzeichnet, dass** bei Erreichen des Zieldrucks, d.h. die öffnenden und schließenden Kräfte stehen im Gleichgewicht, das Ventil durch nahezu sprungartiges Absenken des Stromes auf den Wert 13 nochmals weiter geöffnet wird.. Im Anschluss daran wird das Umschaltventil durch einen Strompuls 14 geschlossen. Dies führt dazu, dass der Ventilstößel mit hoher Geschwindigkeit in den Sitz bewegt wird und damit vollständig schließt.

### Phase 4:

Bei dieser Phase für t > t3 handelt es sich um die Druckhaltephase, in welcher der Bremsdruck im Bremskreis eingesperrt und konstant gehalten werden soll. In der Druckhaltephase wird das Umschaltventil mit dem Strom 15 angesteuert. Bei 15 kann es sich um einen höheren Strom handeln, als für das Schließen des Ventils unbedingt notwendig ist, d.h. 15 > 12. Dadurch steht eine höhere Kraftreserve seitens der schließenden Kraft während des Druckhaltens zur Verfügung.

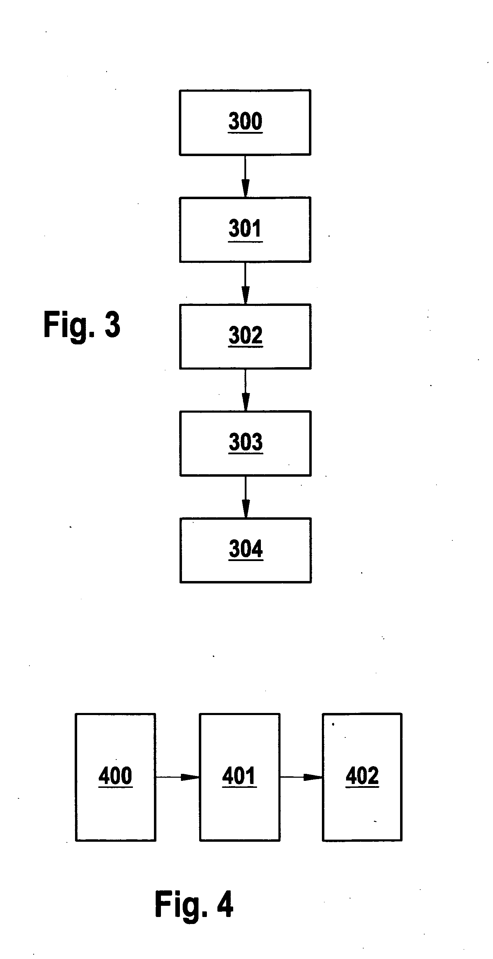

Der Ablauf des erfindungsgemäßen Verfahrens ist in Fig. 3 dargestellt. Nach dem Start des Verfahrens in Block 300 wird in Block 301 dass Magnetventil mit einem ersten Stromwert beaufschlagt wird, welcher zu einem ersten Schließen des Magnetventils führt. Danach wird in Block 302 das Magnetventil mit einem zweiten Stromwert beaufschlagt wird, welcher zu einem erneuten teilweisen Öffnen des Magnetventils führt. Danach wird das Magnetventil in Block 303 mit einem dritten Stromwert beaufschlagt wird, welcher zu einem zweiten Schließen des Magnetventils führt, wobei der dritte Stromwert derart gewählt ist, dass das zweite Schließen mit einer höheren Schließgeschwindigkeit des Magnetventils erfolgt als das erste Schließen. In Block 304 endet das erfindungsgemäße Verfahren.

Der Aufbau der erfindungsgemäßen Vorrichtung ist in Fig. 4 dargestellt. Dabei kennzeichnet Block 401 Sensormittel wie z.B. Drucksensoren, deren Ausgangssignale Ansteuermitteln 401 zugeführt werden, welche wiederum erfmdungsgemäß das Magnetventil 402 ansteuern.

## Patentansprüche

1. Verfahren zum Schließen eines Magnetventils (402) eines Bremskreises, bei dem
- das Magnetventil mit einem ersten Stromwert (I1) beaufschlagt wird, welcher zu einem ersten Schließen des Magnetventils führt (301),
- danach das Magnetventil mit einem zweiten Stromwert (13) beaufschlagt wird, welcher zu einem erneuten teilweisen Öffnen des Magnetventils führt (302),
- danach das Magnetventil mit einem dritten Stromwert (14) beaufschlagt wird, welcher zu einem zweiten Schließen des Magnetventils führt (303),
- wobei der dritte Stromwert (14) derart gewählt ist, dass das zweite Schließen mit einer höheren Schließgeschwindigkeit des Magnetventils erfolgt als das erste Schließen.

2. Verfahren nach Anspruch 1, **dadurch gekennzeichnet, dass** die Beaufschlagung des Magnetventils mit dem zweiten Stromwert (13) derart kurzzeitig ist, dass das Magnetventil nicht vollständig geöffnet wird.

3. Verfahren nach Anspruch 1, **dadurch gekennzeichnet, dass** es sich bei dem Magnetventil um das zwischen dem Hauptbremszylinder (112) sowie der Förderseite der Rückförderpumpe (110) angeordnete Umschaltventil (USV) eines hydraulischen Bremskreises, welcher im Rahmen einer Radschlupfregelung nutzbar ist, handelt.

4. Verfahren nach Anspruch 3, **dadurch gekennzeichnet, dass** die Beaufschlagung des Magnetventils mit dem ersten Stromwert (I1) bei Vorliegen einer Fahrerbremsung (pvor) hinreichend starker Intensität erfolgt.

5. Verfahren nach Anspruch 4, **dadurch gekennzeichnet, dass** die Beaufschlagung des Magnetventils mit dem zweiten Stromwert (I3) und dem dritten Stromwert (14) erst dann erfolgt, wenn die Intensität der Fahrerbremsung (pvor) bereits wieder abgenommen hat.

6. Verfahren nach Anspruch 5, **dadurch gekennzeichnet, dass** durch das Schließen des Umschaltventils (USV) der aufgebaute Bremsdruck im Bremskreis (p) eingesperrt wird.

7. Verfahren nach Anspruch 1, **dadurch gekennzeichnet, dass** das Magnetventil unmittelbar nach der Beaufschlagung mit dem zweiten Stromwert (13) mit dem dritten Stromwert (I4) beaufschlagt wird.

8. Verfahren nach Anspruch 1, **dadurch gekennzeichnet, dass** das Magnetventil nach dem zweiten Schließen mit einem vierten Stromwert (15) beaufschlagt wird, welcher das Magnetventil geschlossen hält.

9. Verfahren nach Anspruch 1, **dadurch gekennzeichnet,**
- **dass** es sich bei dem Magnetventil um ein stromlos offenes Magnetventil handelt,
- **dass** der zweite Stromwert (13) geringer als der erste Stromwert (11) ist und
- **dass** der dritte Stromwert (14) größer als der erste Stromwert (I1) ist.

10. Vorrichtung zur Ansteuerung eines Magnetventils (402), eines Bremskreises, enthaltend Ansteuermittel (401), mittels derer
- das Magnetventil mit einem ersten Stromwert (11) beaufschlagt wird, welcher zu einem ersten Schließen des Magnetventils führt,
- danach das Magnetventil mit einem zweiten Stromwert (13) beaufschlagt wird, welcher zu einem erneuten teilweisen Öffnen des Magnetventils führt
- danach das Magnetventil mit einem dritten Stromwert (14) beaufschlagt wird, welcher zu einem zweiten Schließen des Magnetventils führt,
- wobei der dritte Stromwert (14) derart gewählt ist, dass das zweite Schließen mit einer höheren Schließgeschwindigkeit des Magnetventils erfolgt als das erste Schließen.

## Claims

1. Method for closing a solenoid valve (402) of a brake circuit, in which method
- the solenoid valve is acted on with a first current value (I1) which causes a first closure of the solenoid valve (301),
- the solenoid valve is subsequently acted on with a second current value (I3) which causes a renewed partial opening of the solenoid valve (302),
- the solenoid valve is subsequently acted on with a third current value (I4) which causes a second closure of the solenoid valve (303),
- with the third current value (I4) being selected such that the second closure takes place with a higher closing speed of the solenoid valve than the first closure.

2. Method according to Claim 1, **characterized in that** the solenoid valve is acted on with the second current value (I3) for such a short time that the solenoid valve is not fully opened.

3. Method according to Claim 1, **characterized in that** the solenoid valve is the switching valve (USV), which is arranged between the master brake cylinder (112) and the feed side of the return feed pump (110), of a hydraulic brake circuit which can be used to carry out wheel slip regulation.

4. Method according to Claim 3, **characterized in that** the solenoid valve is acted on with the first current value (I1) if a driver-induced braking action (pvor) of sufficiently high intensity takes place.

5. Method according to Claim 4, **characterized in that** the solenoid valve is acted on with the second current value (I3) and the third current value (I4) only when the intensity of the driver-induced braking action (pvor) has already decreased again.

6. Method according to Claim 5, **characterized in that,** by closing the switching valve (USV), the brake pressure which has been built up is confined in the brake circuit (p).

7. Method according to Claim 1, **characterized in that** the solenoid valve is acted on with the third current value (I4) directly after having been acted on with the second current value (I3).

8. Method according to Claim 1, **characterized in that** the solenoid valve, after the second closure, is acted on with a fourth current value (I5) which holds the solenoid valve closed.

9. Method according to Claim 1, **characterized**
- **in that** the solenoid valve is a solenoid valve which is open in the currentless state,
- **in that** the second current value (I3) is lower than the first current value (I1), and
- **in that** the third current value (I4) is greater than the first current value (I1).

10. Device for activating a solenoid valve (402) of a brake circuit, comprising activating means (401) with which
- the solenoid valve is acted on with a first current value (I1) which causes a first closure of the solenoid valve,
- the solenoid valve is subsequently acted on with a second current value (I3) which causes a renewed partial opening of the solenoid valve,
- the solenoid valve is subsequently acted on with a third current value (I4) which causes a second closure of the solenoid valve,
- with the third current value (I4) being selected such that the second closure takes place with a higher closing speed of the solenoid valve than the first closure.

## Revendications

1. Procédé pour fermer une électrovanne (402) d'un circuit de freinage, dans lequel
- l'électrovanne est soumise à une première intensité de courant (I1) qui provoque une première fermeture (301) de l'électrovanne,
- l'électrovanne est ensuite soumise à une deuxième intensité de courant (I3) qui provoque une réouverture partielle (302) de l'électrovanne,
- l'électrovanne est ensuite soumise à une troisième intensité de courant (I4) qui provoque une deuxième fermeture (303) de l'électrovanne,
- la troisième intensité de courant (I4) étant choisie de telle sorte que la deuxième fermeture s'effectue à une vitesse de fermeture de l'électrovanne supérieure à celle de la première fermeture.

2. Procédé selon la revendication 1, **caractérisé en ce que** l'électrovanne est soumise à la deuxième intensité de courant (I3) pendant une durée suffisamment brève pour que l'électrovanne ne soit pas entièrement ouverte.

3. Procédé selon la revendication 1, **caractérisé en ce que** l'électrovanne est une vanne d'inversion (USV) disposée entre le maître-cylindre de frein (112) et le côté refoulement de la pompe de refoulement (110) d'un circuit de freinage hydraulique, laquelle peut être utilisée dans le cadre d'une régulation du patinage des roues.

4. Procédé selon la revendication 3, **caractérisé en ce que** l'électrovanne est soumise à la première intensité de courant (I1) en présence d'un freinage par le conducteur (pvor) d'une intensité suffisante.

5. Procédé selon la revendication 4, **caractérisé en ce que** l'électrovanne n'est soumise à la deuxième intensité de courant (I3) et à la troisième intensité de courant (I4) que lorsque l'intensité du freinage par le conducteur (pvor) a de nouveau diminuée.

6. Procédé selon la revendication 5, **caractérisé en ce que** la fermeture de la vanne d'inversion (USV) provoque un confinement de la pression de freinage établie dans le circuit de freinage (p).

7. Procédé selon la revendication 1, **caractérisé en ce que** l'électrovanne est soumise à la troisième intensité de courant (I4) immédiatement après avoir été soumise à la deuxième intensité de courant (I3).

8. Procédé selon la revendication 1, **caractérisé en ce que** l'électrovanne, après la deuxième fermeture, est soumise à une quatrième intensité de courant (I5) qui maintient l'électrovanne fermée.

9. Procédé selon la revendication 1, **caractérisé en ce**
- **que** l'électrovanne est une électrovanne ouverte au repos,
- **que** la deuxième intensité de courant (I3) est inférieure à la première intensité de courant (I1) et
- **que** la troisième intensité de courant (I4) est supérieure à la première intensité de courant (I1).

10. Dispositif de commande d'une électrovanne (402) d'un circuit de freinage, comprenant des moyens de commande (401) avec lesquels
- l'électrovanne est soumise à une première intensité de courant (I1) qui provoque une première fermeture de l'électrovanne,
- l'électrovanne est ensuite soumise à une deuxième intensité de courant (I3) qui provoque une réouverture partielle de l'électrovanne,
- l'électrovanne est ensuite soumise à une troisième intensité de courant (I4) qui provoque une deuxième fermeture de l'électrovanne,
- la troisième intensité de courant (I4) étant choisie de telle sorte que la deuxième fermeture s'effectue à une vitesse de fermeture de l'électrovanne supérieure à celle de la première fermeture.
